# EUROPEAN PATENT SPECIFICATION

(11) **EP 2 074 001 B1**
(45) Date of publication and mention of the grant of the patent: **15.12.2010**
(21) Application number: 07735557.6
(22) Date of filing: 19.04.2007
(51) Int. Cl.: B60S 1/40

(54) **AN ADAPTOR FOR THE VEHICLE WINDSHIELD WIPER**
ADAPTER FÜR DEN SCHEIBENWISCHER EINES FAHRZEUGS
ADAPTATEUR POUR ESSUIE-GLACE DE VÉHICULE

(30) Priority: 21.04.2006 TR 200601961
(43) Date of publication of application: 01.07.2009
(73) Proprietor: Teklas Kaucuk Sanayi Ve Ticaret A.S., Gebze, 41400, Kocaeli (TR)
(72) Inventor: YAZICI, Ertan, 41400 Gebze Kocaeli (TR); SONMEZ, Bekir, 41400 Gebze Kocaeli (TR)
(74) Representative: Yavuzcan, Alev
(86) International application number: PCT/IB2007/051423
(87) International publication number: WO 2007/122568

(56) References cited:
- DE-A1-102004 019 541
- DE-B- 1 108 580
- FR-A- 2 600 291
- US-A1- 2006 010 636

## Description

The present invention relates to a development in the adapter providing the connection of the wiper blades to the wiper arm that fixes the wiper blade to the vehicle in the windshield wipers used in vehicles. This adaptor means is provided on the wiper blade component for the purpose of replacing the windshield wiper when required. The adapter is attached on a metal element provided on the wiper blade by means of a pin inserted through the pin holes on the adapter body.

Prior Art

In the state of the art, for example in the patent application no. US2006010636 of Valeo Systems, an independent piece known as an adapter is mounted on the windshield wiper blade. Opposite holes are provided on the side walls of the said adapter body wherein a rod is inserted. The straight end windshield wiper arm is emplaced in the adapter and locked to the adapter. Locking is provided by a tongue on a vertically resilient extension in and connected to the adaptor body being seated into the housing of the windshield wiper arm. The disadvantage of this technique is that the locking mechanism is based only on the principle of elastic deformation of plastic in a narrow section and after long term usage the locking mechanism will be rendered inoperative as a result of the plastic deformation caused by fatigue in the resilient region.

In another prior art patent application No. FR20040052123 of Bosch GmbH the arm is provided with a pin and a clasp arm and the pin is inserted in a pin slot on the wiper blade and the blade is clasped by the clasp arm. The disadvantage of this reference is that in positions where the wiper blade is freed of the clasp arm, it will also be dislodged easily from the pin. In another reference, in the patent application No. WO2005082691 A1, of Federal Mogul S.A., locking is provided by the metal longitudinal strip connected to the wiper arm and the tongue in the plastic element mounted on the wiper blade being inserted into the hole at the center of the plastic element.

The disadvantage of this reference is that the locking made by the tongue in the plastic element will not be serviceable in the long term use.
Document FR-A-2 600 291 discloses a windshield wiper adapter according to the preamble of claim 1.

In order to eliminate the indicated disadvantages, according to the present invention, a locking catch assembled to the adapter body, provides locking from the bottom and by pivoted operational method.

The present invention will be explicated in detail with reference to the attached figures below, where:

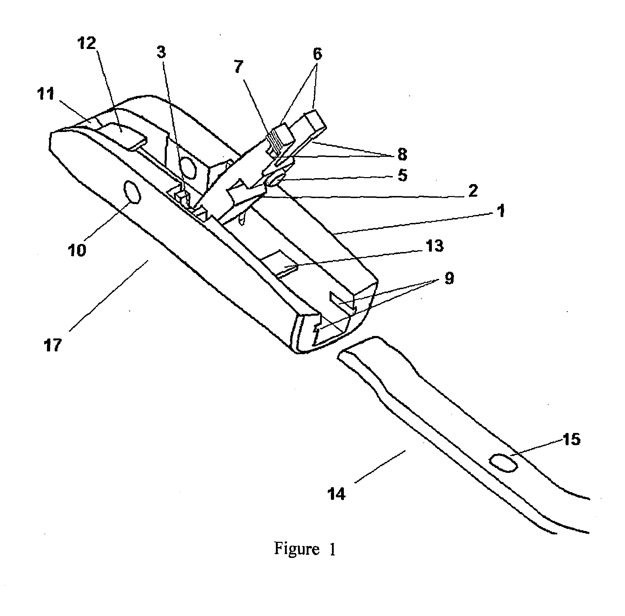

Figure 1 - is the perspective view of the adapter and the windshield wiper arm.

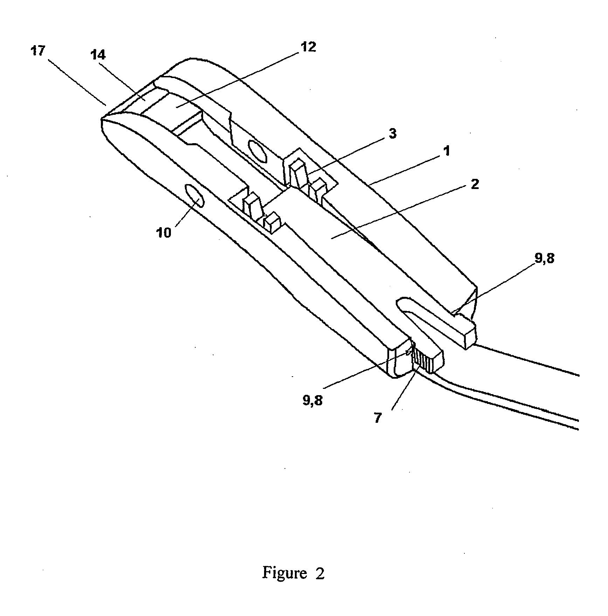

Figure 2 - is the perspective view of the windshield wiper arm locked in the adapter.

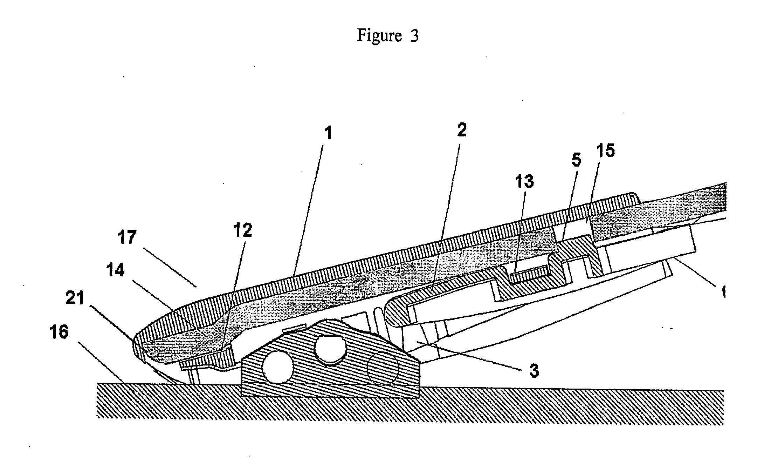

Figure 3 - is the sectional view of the adapter on the windshield wiper blade locked to the windshield wiper arm.

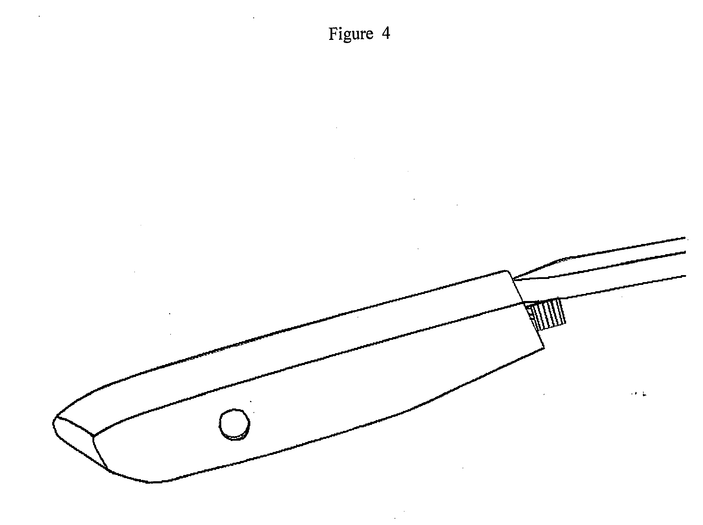

Figure 4 - is the top view of the assembled adapter.

THE DETAILED EXPLANATION OF THE PRESENT INVENTION

The present invention relates to an adapter element (17) used for the connection of the windshield wiper blade (16) to the windshield wiper arm (14). The adapter element (17) provides locking of the wiper blade (16) and the windshield wiper arm (14) for a safe and long term use locking, on the other hand allows the wiper blade (16) to be easily mounted or dismounted from the windshield wiper arm (14) when required. The free end of the windshield wiper arm (14) wherein the wiper blade (16) is mounted is a metal element having a rectangular section and a stepped end, ending with a 45° bevel. On the windshield wiper arm (14) a slot (15) is provided that is used by the locking mechanism.

The adapter (17) of the present invention is a plastic element with a U shaped crosswise section, with one end open and the other closed, having a channel (11) inside which the windshield wiper arm (14) can be seated longitudinally. When the windshield wiper arm (14) is seated in the channel (11) in the adapter body (1), the locking of the adapter (17) and the windshield wiper arm (14) to each other is provided by a pivoted locking snib (2).

The locking catch (2) connected to the center of the adapter (17) by a pivot (3) is a plastic element, with a fork shaped free end (6) with a jagged portion (7) on the outer surface of the fork ends (6), having a length that can project out from the open end of the adapter body (1) while in the locked position. The locking catch (2) can rotate almost up to 180° around the pivot (3) by which it is connected to the body (1).

The locking catch (2) fixes the windshield wiper arm (14) to the body (1) serving as an intermediary element.

It provides for two kinds of locking functions. The first is the locking of the windshield wiper arm (14) to the locking catch (2) to each other and the second is the locking of the locking catch (2) and the body (1) to each other.

The windshield wiper arm (14) is inserted into the channel (11) inside the adapter body (1) from the open end of the adapter (17) and stops by bearing on the closed end. At the same time the locking catch (2) that stands in an angular position with the body (1) when in the free position, is rotated around the pivot (3) towards the windshield wiper arm (14) and brought to the horizontal position. The end of the locking catch (2) is pressed from its conveniently resilient forked ends (6) and is fitted into the body (1).

When released, the forked ends (6) are separated again, and the outwardly locking latches (8) on the free end (6) of the locking catch (2) are fitted into the housings (9) situated on the inner surface of the body (1) near the open end. These locking latches (8) on the locking catch (2) on both ends are situated on the side surfaces of the forked ends (6) of the locking catch (2) and at the beginning of the jagged portion (7).

The profile of these latches (8) has one surface that is sloped to help entrance into the housing (9) in the body (1), and another surface is flat so that after the locking it presses on the housing (9) surface to serve as the lock.

The locking of the locking catch (2) to the windshield wiper arm (14) is realized by the other locking latch (5) on the upper surface of the locking catch (2) being seated in the slot (15) on the windshield wiper arm (14) when the locking catch (2) is seated in the housing (9) in the body (1). Consequently when the locking catch (2) is fixed to the body (1) it is simultaneously fixed to the windshield wiper arm (14).

The channel (11) in the body (1) wherein the windshield wiper arm (14) enters, is formed by means of the U shaped cross-section of the body (1) at the top and the two sides and at the bottom by the bridges (12, 13) disposed between the two flanks of the body (1).

The first bridge (12) is close to the closed end of the body (1) and bears the end of the windshield wiper arm (14), the other (13) is close to the open end of the body (1) and bears the windshield wiper arm (14) at the entrance. The windshield wiper arm (14) inserted longitudinally into the channel (11) from the open end of the body (1) stops by bearing on the closed end of the body (1) and thus is fixed in place. When the windshield wiper blade (16) is desired to be changed, the locking catch (2) is held from its outward projecting jagged portion (7), is pressed and lifted. The windshield wiper arm (14) in the adapter (17) is released as the locking catch (2) is lifted and is dislodged easily by pulling it out longitudinally.

Since no force will be exerted on the forked ends (6) of the locking catch (2) while the windshield wiper arm (14) operates, the lock can not be loosened.

Since there is no region on the ridge of the adapter (17) for collecting water, falling of water drops on the surface of the windshield glass is prevented while the wiper blade (16) operates.

## Claims

1. A windshield wiper (16) adapter (17) comprising a locking catch (2), with one end free, the other pivotally rotatable around a pivot (3) inside the adapter (17), seated in pin holes (10) that are placed in a channel (11) of said adapter wherein the windshield wiper arm (14) will be emplaced, having a locking position parallel to the channel (11), with the free end being a forked end (6) formed of two parts, on the exterior portions of the forked ends' (6) legs wherein jagged portions (7) are arranged to provide safer and easier grip with the hands, **characterized in that** the adapter comprises at least one locking latch (8) having a sloped configuration, formed on the outer surfaces of at least one or preferably two of the free forked ends (6) of the said locking catch (2), providing locking by the insertion thereof into the housing (9) formed in the adapter body (1) and opened by squeezing manually the jagged portions (7) of the forked free ends (6) of the locking catch (2).

## Patentansprüche

1. Adapter (17) für einen Scheibenwischer (16) mit einem Verriegelungselement (2), dessen eines Ende frei ist, und dessen anderes Ende um einen Drehzapfen (3) im Inneren des Adapters (17) drehbar ist, der in Stiftöffnungen (10) sitzt, die in einem Kanal (11) des Adapters (17) angeordnet sind, in den der Scheibenwischerarm (14) gesetzt wird, mit einer Verriegelungsposition, die parallel zum Kanal (11) verläuft, wobei das freie Ende ein gegabeltes Ende (6) ist, das aus zwei Teilen gebildet ist, wobei an den Außenabschnitten der Füße der gegabelten Enden (6) mit Rillen versehene Abschnitte (7) angeordnet sind, die ein sichereres und leichteres Ergreifen mit den Händen ermöglichen, **dadurch gekennzeichnet, dass** der Adapter (17) mindestens einen Riegel (8) mit geneigter Konfiguration aufweist, der an den Außenflächen von wenigstens einem oder vorzugsweise zwei der freien gegabelten Enden (6) des Verriegelungselements (2) ausgebildet ist, und der ein Verriegeln ermöglicht, indem er in das Gehäuse (9) gesetzt wird, das im Adapterkörper (1) ausgebildet ist, und geöffnet wird, indem die mit Rillen versehenen Abschnitte (7) der gegabelten freien Enden (6) des Verriegelungselements (2) manuell gedrückt werden.

## Revendications

1. Un adaptateur (17) d'essuie-glace (16) comprenant un cliquet (2), avec une extrémité libre, l'autre tournant de manière pivotante autour d'un pivot (3) dans l'adaptateur (17), assis dans les trous de goupille (10) qui sont situés dans un canal (11) de ledit adaptateur (17) dans lequel le bras d'essuie-glace (14) sera placé, ayant une position de verrouillage parallèle au canal (11), avec l'extrémité libre étant une extrémité fourchue (6) formée de deux parties, sur les parties extérieurs des jambes des extrémités fourchues (6) où les parties déchiquetées (7) sont arrangées à assurer une prise plus sûr et plus facile avec les mains, **caractérisé en ce que** l'adaptateur (17) comprenant au moins un loquet de verrouillage (8) ayant une configuration en pente, qui est formé sur les surfaces extérieures d'au moins un ou deux de préférence des extrémités libres fourchues (6) du ledit cliquet (2), qui assure le verrouillage par l'insertion de celui-ci dans le boîtier formé dans le corps de l'adaptateur (1) et qui est ouvert en pressant manuellement les parties déchiquetées (7) des extrémités libres fourchues (6) du cliquet (2).
